# EUROPÄISCHE PATENTANMELDUNG

(11) **EP 0 836 035 A2**
(43) Veröffentlichungstag der Anmeldung: **15.04.1998**
(21) Anmeldenummer: 97114881.2
(22) Anmeldetag: 28.08.1997
(51) Int. Cl.: F16G 3/00

(54) **Endlosverbindung für Zahnriemen**

(30) Priorität: 29.08.1996 DE 19634908
(71) Anmelder: RRG-Industrietechnik GmbH, 45470 Mülheim / Ruhr (DE)
(72) Erfinder: Eikmeyer, Günter, Dipl.-Ing., 45136 Essen (DE)

(57) **Zusammenfassung**

Bei einer Endlosverbindung für Zahnriemen mit ineinandergreifenden Riemenzungen (2; 2b) und Ausschnitten (9; 9b) wird erfindungsgemäß die Aufgabe einer Stabilisierung der Verbindungsstelle dadurch gelöst, daß die einander zugewandten Seitenflanken der miteinander zu verbindenden Riemenzungen (2; 2b) zu Zwecken kraftschlüssiger Verbindbarkeit mit Verzahnungen (10) oder gleichwertigen Profilierungen versehen sind.

## Beschreibung

Die Erfindung bezieht sich auf eine Riemenverbindung nach dem Gattungsbegriff des Patentanspruchs 1. Gegenstände dieser Art sind aus der DE-PS 23 22 343 und dem von der Anmelderin selbst ausgehenden DE-GM 94 13 415 bekannt. Aufgabe der Erfindung ist es, bei der Riemenverbindung mit Riemenzungen, Ausschnitten und durch die Zungen hindurchführbaren Spann- und Verriegelungsstiften, insbesondere bei Riemen mit kleiner Teilung und vergleichsweise geringen Abmessungen, die Verriegelungsstifte von der Einwirkung der Zugkraft zu entlasten und die Verbindung der Riemenzungen sozusagen selbsttragend zu gestalten. Die Lösung dieser Aufgabe wird erfindungsgemäß durch den Wortlaut des kennzeichnenden Teils des Patentanspruchs 1 skizziert. Eine besonders vorteilhafte Ausführungsart der Lösung ergibt sich aus dem Wortlaut des Patentanspruchs 2.

Anhand der Zeichnungen sei die Erfindung beispielhaft erläutert.
Es zeigen:
- Figur 1: die Riemenverbindung in Explosivdarstellung und
- Figur 2: ein Teilstück der Verbindung in perspektivischer Sicht.

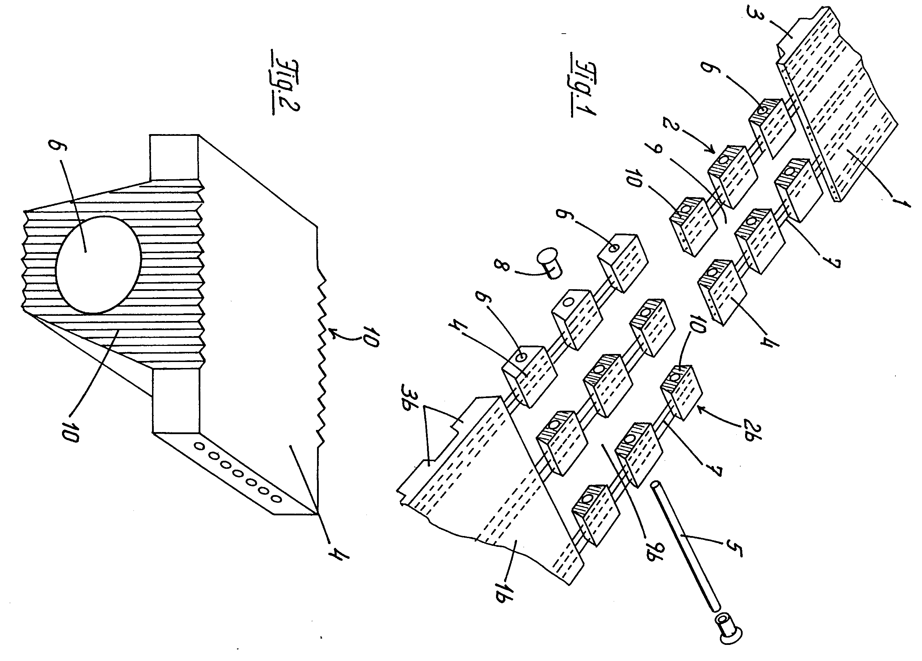

Mit 1 und 1b sind die miteinander zu verbindenden Zahnriemenenden bezeichnet. Ineinandergreifende Riemenzungen 2; 2b und Ausschnitte 9; 9b dienen der Riemenverbindung unter Verwendung von Spann- und Verriegelungsstiften 5 mit zugehörigen Sicherungshülsen 8. Die Riemenzungen werden gebildet durch metallische Zahnprofilkörper 4, die mit in den Riemenquerschnitt eingebetteten Verstärkungskorden 7 durch Löten, Verpressen, Verschweißen oder dergleichen kraftschlüssig verbunden und mit Zahnabstand zu den vorhergehenden eigentlichen Riemenzahnprofilen 3; 3b angeordnet sind. Löcher 6 in den Profilkörpem 4 dienen dem Durchtritt der Spann- und Verriegelungsstifte 5. Die einander zugewandten Seitenflanken der zu den Riemenzungen 2; 2b gehörigen Profilkörper 4 sind zumindest teilflächig mit Verzahnungen 10 oder gleichwertigen Profilierungen versehen, welche bei geschlossener Riemenverbindung unter Einwirkung der Spann- und Verriegelungsstifte 5; 8 nachbarschaftlich kraftschlüssig ineinandergreifen und so zugkraftübertragend wirken.

### Bezugszeichenliste

- 1; 1b: - Zahnriemenenden
- 2; 2b: - Riemenzungen
- 3; 3b: - Zahnprofile des Riemens
- 4: - metallische Zahnprofilkörper
- 5: - Spann- und Verriegelungsstift
- 6: - Stiftlöcher
- 7: - Verstärkungskorde
- 8: - Sicherungshülse
- 9; 9b: - Ausschnitte
- 10: - Verzahnung

## Patentansprüche

1. Endlosverbindung für Zahnriemen mit längslaufenden, im Riemenquerschnitt eingebetteten Verstärkungskorden, mit ineinandergreifenden Zungen und Ausschnitten in den zu verbindenden Stirnenden des Riemens und mit mindestens einem quer zum Riemen durch die zu verbindenden Riemenenden durch Stiftlöcher führbaren Spann- und Verriegelungsstifte mit zugehörigen Sicherungshülsen.
**dadurch gekennzeichnet**,
daß die einander zugewandten Seitenflanken der miteinander zu verbindenden Riemenzungen (2; 2b) mit bei geschlossener Riemenverbindung ineinandergreifenden Verzahnungen (10) oder gleichwertigen Profilierungen versehen sind.

2. Endlosverbindung nach Anspruch 1;
**dadurch gekennzeichnet**,
daß die Riemenzungen (2; 2b) in an sich bekannter Weise durch wenigstens je einen mit Zahnabstand zu den vorhergehenden Zahnprofilen (3; 3b) angeordneten metallischen Zahnprofilkörper (4) dargestellt werden der kraftschlüssig mit den Verstärkungskorden (7) verbunden ist, wobei die einander zugewandten Seitenflanken der miteinander zu verbindenden Zahnprofilkörper (4) mit gegenseitig in Eingriff bringbaren Verzahnungen (10) oder gleichwertigen Profilierungen versehen sind.
